# EUROPÄISCHE PATENTSCHRIFT

(11) **EP 3 830 522 B1**
(45) Veröffentlichungstag und Bekanntmachung des Hinweises auf die Patenterteilung: **18.01.2023**
(21) Anmeldenummer: 19748494.2
(22) Anmeldetag: 25.07.2019
(51) Int. Cl.: G01C 21/26, G01C 21/30, G05D 1/02

(54) **VERFAHREN ZUR SCHÄTZUNG DER LOKALISIERUNGSGÜTE BEI DER EIGENLOKALISIERUNG EINES FAHRZEUGES, VORRICHTUNG FÜR DIE DURCHFÜHRUNG DES VERFAHRENS, FAHRZEUG SOWIE COMPUTERPROGRAMM**
METHOD FOR ESTIMATING THE QUALITY OF LOCALISATION IN THE SELF-LOCALISATION OF A VEHICLE, DEVICE FOR CARRYING OUT THE METHOD, VEHICLE, AND COMPUTER PROGRAM
PROCÉDÉ POUR ESTIMER LA QUALITÉ DE LA LOCALISATION LORS DE LA LOCALISATION PROPRE D'UN VÉHICULE, DISPOSITIF POUR METTRE EN OEUVRE LE PROCÉDÉ, VÉHICULE ET PROGRAMME INFORMATIQUE

(30) Priorität: 27.07.2018 DE 102018118220
(43) Veröffentlichungstag der Anmeldung: 09.06.2021
(73) Patentinhaber: VOLKSWAGEN AKTIENGESELLSCHAFT, 38440 Wolfsburg (DE); MAN Truck & Bus SE, 80995 München (DE)
(72) Erfinder: WILBERS, Daniel, 38440 Wolfsburg (DE); MERFELS, Christian, 38102 Braunschweig (DE); RECH, Bernd, 38556 Bokensdorf (DE); SCHAPER, Thilo, 31275 Lehrte (DE); KOCH, Niklas, 38479 Tappenbeck (DE); JÜRGENS, Stefan, 38106 Braunschweig (DE); PERDOMO LOPEZ, David, 38100 Braunschweig (DE); HUNGAR, Constanze, 38100 Braunschweig (DE)
(74) Vertreter: Schmidt-Uhlig, Thomas
(86) Internationale Anmeldenummer: PCT/EP2019/070063
(87) Internationale Veröffentlichungsnummer: WO 2020/021022

(56) Entgegenhaltungen:
- DE-A1-102015 220 360
- DE-A1-102017 101 466

## Beschreibung

In naher Zukunft werden autonome Fahrsysteme in den Fahrzeugen eingesetzt, die es ermöglichen, dass der Fahrer nicht mehr dauerhaft mit der Fahraufgabe beschäftigt ist und bei aktivem Fahrsystem Nebentätigkeiten (Lesen, Schlafen, Nachrichten schreiben...) durchführen kann.

Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomem Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- Level 0: "Driver only", der Fahrer fährt selbst, lenkt, gibt Gas, bremst, etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Auch der Verband der Automobilindustrie VDA gibt eine eigene Definition der verschiedenen Stufen im Automatisierungsgrad heraus.

Automatisierte Fahrfunktionen ab Stufe 3 nehmen dem Fahrer die Verantwortung für die Steuerung des Fahrzeugs ab. Für solche automatisierten Fahrsysteme ist die Eigenlokalisierung des Fahrzeuges immens wichtig. Dafür reicht die Positionsbestimmung basierend auf den bekannte GNSS-Systemen, entsprechend Global Navigation Satellite System, wie GPS (Global Positioning System) nicht aus. Um die Genauigkeit bei der Positionsbestimmung zu erhöhen, werden in den automatisierten Fahrsystemen hochgenaue Umgebungskarten eingesetzt. Das Fahrzeug "scannt" die Umgebung ab, dafür werden bildgebende Sensoren wie Videokamera, Infrarotkamera, LIDAR-Sensoren (Light Detection and Ranging), RADAR-Sensoren (Radio Detection and Ranging) und Ultraschall-Sensoren eingesetzt. Durch Auswertung der von den Sensoren aufgenommenen Bilder werden die Abstände zu bestimmten in der Karte verzeichneten Umgebungsmerkmalen, die auch als Landmarken bezeichnet werden, bestimmt. Daraus ergibt sich dann eine verbesserte Genauigkeit bei der Eigenlokalisierung. Damit lassen sich dann neuere autonome Fahrfunktionen oder neuere Fahrerassistenzsysteme, wie ein "Baustellenassistent" realisieren.

Für die Eigenlokalisierung von automatisch fahrenden Fahrzeugen sind verschiedene Konzepte bekannt. Bei einigen werden statische Strukturen und Muster in der Fahrzeugumgebung von den Fahrzeugsensoren erkannt und mit entsprechenden Eintragungen in einer Karte verglichen, welche im Fahrzeug verfügbar ist (z. B. Landmarkenbasierte Lokalisierung, Road DNA von tomtom, Road Data Base von Conti-Ygomi, etc.). Diese Konzepte erfordern eine möglichst genaue und aktuelle Karte mit den eingetragenen Umgebungsmerkmalen. Außerdem setzen sie die Sichtbarkeit der von ihnen verwendeten Umgebungsmerkmale durch die Fahrzeugsensoren voraus. Entsprechend ist die Güte der Lokalisierung von der Verfügbarkeit detektierbarer Umgebungsmerkmale sowie der Genauigkeit der Detektion und der Genauigkeit der Karteneinträge abhängig.

Aus der DE 10 2015 010 542 A1 ist ein Verfahren zur Erzeugung einer digitalen Umgebungskarte bekannt. Dabei werden Objekte oder Hindernisse von Umgebungssensoren erfasst. Dabei wird eine von dem Fahrzeug tatsächlich befahrene Route mit einer Route in der Umgebungskarte verglichen und basierend darauf aktualisierte Karteninformationen erzeugt und in der Umgebungskarte gespeichert.

Aus der WO 2017/028994 A1 ist ein Verfahren zum Lokalisieren eines automatisierten Kraftfahrzeuges bekannt. Das Verfahren beinhaltet die folgenden Schritte: Vorgeben einer zu erzielenden Lokalisierungsgenauigkeit für das automatisierte Kraftfahrzeug, Erfassen von Umgebungsdaten des automatisierten Kraftfahrzeugs mittels einer Sensoreinrichtung des automatisierten Kraftfahrzeugs und Verknüpfen der erfassten Umgebungsdaten mit Ortsinformation; Lokalisieren des automatisierten Kraftfahrzeugs mittels Lokalisierungsreferenzdaten und der erfassten Umgebungsdaten, wobei eine erreichte Lokalisierungsgenauigkeit signalisiert wird. Für den Fall, dass eine Lokalisierungsgenauigkeit mit den vorhandenen Lokalisierungsreferenzdaten nicht erreicht wird, können Funktionalitäten des automatisierten Kraftfahrzeugs deaktiviert werden.

Aus der DE 10 2011 119 762 A1 ist ein Verfahren zur Positionsbestimmung eines Kraftfahrzeuges bekannt. Die Positionsbestimmung im Fahrzeug erfolgt durch eine Kombination von absoluter Positionsbestimmung mit Hilfe von in einer digitalen Karte eingetragenen Landmarken, unterstützt durch eine interpolierende Koppelmessung mit Hilfe einer Inertialsensorik IMU, gegebenenfalls unterstützt durch Odometer a.

Aus der DE 10 2015 220 360 A1 ist ein Verfahren zur Erzeugung eines Signals zur Überführung eines teil- oder hochautomatisierten Fahrzeugs in einen sicheren Systemzustand an einer Zielpose bekannt. Zunächst findet eine Ermittlung einer Notwendigkeit zur Überführung des Fahrzeugs in einen sicheren Systemzustand statt. Anschließend wird ein Fahrzustand bestimmt, wobei der Fahrzustand die aktuelle Fahrzeugposition umfasst. Bei dem Verfahren werden zu erwartende Lokalisierungsgenauigkeiten entlang von ermittelten Fahrtrajektorien berechnet und diese Lokalisierungsgenauigkeiten zur Bewertung der Fahrtrajektorien verwendet. Die Berechnung der zu erwartenden Lokalisierungsgenauigkeit auf einer Fahrtrajektorie kann auf Basis von Landmarken entlang dieser Fahrtrajektorie erfolgen.

Aus der DE 10 2017 101 466 A1 ist ein Verfahren zum Verfolgen von Objekten in einer dynamischen Umgebung zur verbesserten Lokalisierung bekannt. Es werden Erfassungsvorrichtungen benutzt, um Daten über die Umgebung eines Fahrzeugs zu erhalten. Falls sich die Sensordaten verschlechtert haben, wie etwa Daten, die angeben, dass Spurlinien abgenutzt, verdeckt oder nicht existent sind, verwendet das Fahrzeugcomputersystem zuvor detektierte Sensordaten zur Schätzung der Geschwindigkeit und Richtung von Bewegung sich bewegender Objekte.

Die Güte der Lokalisierung ist im Kontext des automatischen Fahrens ein sicherheitsrelevantes Kriterium für unterschiedliche Fahrzeugfunktionen. Ist beispielsweise absehbar, dass das Fahrzeug sich nicht mehr genau genug lokalisieren kann, so ist eine situationsabhängige Reaktion des Fahrzeugs möglich. Beispielsweise kann ein Fahrer rechtzeitig zur Übernahme aufgefordert werden oder das Fahrzeug kann seine Geschwindigkeit reduzieren oder es kann selbstständig ein Haltemanöver durchführen. Daher ist es essentiell, die aktuelle und zukünftige Lokalisierungsgüte zu schätzen.

Die Erfindung setzt sich zur Aufgabe, eine Lösung zu finden für das Problem der Schätzung der zukünftig zu erwartenden Lokalisierungsgüte.

Diese Aufgabe wird durch ein Verfahren zur Schätzung der Lokalisierungsgüte bei der Eigenlokalisierung eines Fahrzeuges gemäß Anspruch 1, eine Vorrichtung für die Durchführung des Verfahrens gemäß Anspruch 8, ein Fahrzeug gemäß Anspruch 9 sowie ein Computerprogramm gemäß Anspruch 10 gelöst.

Die abhängigen Ansprüche beinhalten vorteilhafte Weiterbildungen und Verbesserungen der Erfindung entsprechend der nachfolgenden Beschreibung dieser Maßnahmen.

Der Vorschlag behandelt das Problem der Schätzung der zukünftig zu erwartenden Lokalisierungsgüte. Diese wird bestimmt durch die zukünftige Sichtbarkeit der Umgebungsmerkmale. Typischerweise ist die Lokalisierungsgüte von der Anzahl der sichtbaren Umgebungsmerkmale abhängig sowie auch von deren Verteilung im Raum. Generell kann gesagt werden, dass die Lokalisierungsgüte umso besser ist, je mehr Umgebungsmerkmale für den Abgleich mit der Karte zur Verfügung stehen und je besser diese im Raum verteilt sind. Aus der Kenntnis der für die Fahrzeugsensoren während der Fahrt vermutlich sichtbaren Umgebungsmerkmale (Anzahl und Verteilung im Raum) kann ein Gütemaß für die vorausliegende Strecke prädiziert werden.

Der Begriff Umgebungsmerkmal betrifft allgemein charakteristische Merkmale in der Umgebung eines Objektes. Im Folgenden wird häufig synonym von einer Landmarke gesprochen. Unter dem Begriff Landmarke wird häufig ein deutlich sichtbares Umgebungsmerkmal verstanden. Beispiele von Landmarken betreffen ein aufgestelltes Küstenseezeichen wie einen Leuchtturm oder ein anderes auffälliges, meist weithin sichtbares topographisches Objekt. Dementsprechend können beispielsweise Kirchen, Türme, Windräder, Burgen, Berge oder freistehende markante große Bäume Landmarken darstellen. Sie spielen bei der räumlichen Orientierung und terrestrischen Navigation eine wichtige Rolle und werden daher auf Karten gegebenenfalls durch besondere Kartenzeichen markiert. Es kann sich aber auch um ein auf der Fahrbahn deutlich sichtbares Umgebungsmerkmal handeln, wie Fahrbahnmarkierungen auf der Fahrbahn, z.B. Fahrstreifenmarkierungen, Richtungspfeile, Haltelinien, usw.

In einer Ausgestaltung betrifft der Vorschlag ein Verfahren zur Schätzung der Lokalisierungsgüte bei der Eigenlokalisierung eines Fahrzeuges, bei dem zur Eigenlokalisierung eine Umgebungskarte eingesetzt wird, die bei der Steuerung eines Fahrzeuges zum Einsatz kommt, wobei ein Fahrzeug bei Befahren einer Fahrbahn versucht, eine Anzahl von in der Umgebungskarte verzeichneten Landmarken sensorisch zu erfassen, und aus der Lage der Anzahl von Landmarken die Eigenposition des Fahrzeuges bestimmt. Bei dem Verfahren wird vorschlagsgemäß im Fahrzeug die zukünftige Sichtbarkeit von Landmarken bestimmt und in Abhängigkeit von der zukünftigen Sichtbarkeit der Landmarken die Lokalisierungsgüte für die zukünftige Eigenlokalisierung des Fahrzeuges geschätzt. Die Lokalisierungsgüte ist eine wichtige Information, die bei der Beurteilung herangezogen wird, ob die automatische Fahrfunktion in einem sicheren Zustand betrieben werden kann. Wenn die automatische Fahrfunktion so eingeschätzt wird, dass sie die erforderlichen Sicherheitskriterien nicht mehr erfüllt, muss sie entweder abgeschaltet werden und der Fahrer des Fahrzeuges wird zur Übernahme der Steuerungsfunktion aufgefordert, oder es werden andere Maßnahmen getroffen, wie Abbremsung des Fahrzeuges bis zum Stillstand, Steuern des Fahrzeuges an den Straßenrand oder auf einen Parkplatz oder eine Nothaltebucht, Warnung des Fahrers und/oder der anderen Verkehrsteilnehmer, usw. Der Vorschlag betrifft also einen sicherheitsrelevanten Aspekt zur Realisierung einer automatischen Fahrfunktion und ihm kommt bereits aus diesem Grund größere Bedeutung zu.

Der Schritt zur Bestimmung der zukünftigen Sichtbarkeit von Landmarken beinhaltet einen Schritt des Detektierens von Hindernissen, die die Sichtbarkeit von Landmarken einschränken. Hindernisse könnten unbewegliche Hindernisse wie Gebäude oder andere Bauwerke sein, oder auch natürliche Hindernisse wie Gebirge, Bäume, Felsen. Daneben gibt es auch bewegliche Hindernisse wie Fahrzeuge der anderen Verkehrsteilnehmer.

Während die unbeweglichen Hindernisse typischerweise so detektiert werden, dass sie in der Umgebungskarte verzeichnet sind und zur Detektion die entsprechenden Angaben aus der Umgebungskarte entnommen werden, erfolgt erfindungsgemäße eine sensorische Erfassung von beweglichen Hindernissen auf der Fahrbahn und optional in der Umgebung der Fahrbahn für den Schritt des Detektierens von Hindernissen. Die Detektion von beweglichen Hindernissen ist bedeutend, denn die Fahrzeuge mit automatischer Fahrfunktion benutzen das öffentliche Straßennetz, wo häufig dichter Verkehr vorherrscht, so dass ein Hauptgrund zur Einschränkung der Sichtbarkeit von Landmarken in der Verdeckung durch andere Verkehrsteilnehmer besteht.

Der Schritt zur Bestimmung der zukünftigen Sichtbarkeit von Landmarken umfasst weiterhin einen Schritt der Schätzung von Bewegungstrajektorien der beweglichen Hindernisse. Dies ist nötig, um die zukünftige Sichtbarkeit von Landmarken beurteilen zu können.

Erfindungsgemäß werden die vorausberechneten Positionen der beweglichen Hindernisse in die Umgebungskarte eingetragen. Dies macht das Verfahren besonders effizient. Für die Eigenlokalisierung wird ohnehin die Umgebungskarte benutzt. Wenn dann darin auch die beweglichen Hindernisse wie die unbeweglichen Hindernisse verzeichnet sind, braucht an dem Algorithmus, der die Eigenlokalisierung berechnet, keine substantielle Änderung vorgenommen zu werden.

Hier ist es zur Erhöhung der Genauigkeit vorteilhaft, wenn der Schritt des Eintragens der vorausberechneten Positionen der beweglichen Hindernisse in die Umgebungskarte einen Schritt des Eintragens der räumlichen Ausdehnung des Hindernisses umfasst.

Diesbezüglich ist es auch vorteilhaft, wenn der Schritt zur Bestimmung der zukünftigen Sichtbarkeit von Landmarken weiterhin einen Schritt der Schätzung des zukünftigen Sichtbereiches eines Sensors des Fahrzeuges umfasst. Dabei wird ein Zeitpunkt bestimmt, wann die zukünftige Sichtbarkeit zu beurteilen ist. Mit der bekannten Bewegungstrajektorie des Eigenfahrzeuges wird die zukünftige Sensorposition ermittelt. Für diese Position wird dann der Sichtbereich des Sensors des Fahrzeuges bestimmt.

Danach kann dann in vorteilhafter Weise die Ermittlung der aufgrund des ermittelten zukünftigen Sichtbereiches zukünftig durch den Sensor zu beobachtenden Landmarken stattfinden.

Schließlich wird in einer Variante die Lokalisierungsgüte bei der Eigenlokalisierung des Fahrzeuges in Abhängigkeit von der Anzahl der zukünftig zu beobachtenden Landmarken bestimmt. Diese Variante ist besonders einfach zu implementieren, ohne großen Rechenaufwand zu verursachen.

In einer genaueren Variante wird die Lokalisierungsgüte durch statistische Auswertung der zukünftig zu beobachtenden Landmarken unter Berücksichtigung der relativen Lage der Landmarken zueinander bestimmt.

Dies kann in vorteilhafter Weise durch Berechnung der Kovarianz der relativen Lagen der zu beobachtenden Landmarken zueinander in Bezug zur Position des Fahrzeuges erfolgen.

Zusammengefasst kann das Verfahren in einer Ausführungsform die folgenden Schritte umfassen:
1. Durch sensorische Erfassung detektiert das automatische Fahrzeug dynamische und statische Objekte auf der Straße sowie in direkter Umgebung der Straße, z. B. andere Fahrzeuge, Hindernisse, und schätzt deren Abmessungen ab. Hierzu können umhüllende Quader mit Längen-, Breiten- und Höhenangabe definiert werden.
2. Es wird die Bewegung dieser Umhüllungen in der nahen Zukunft abgeschätzt.
3. Die Umhüllungen dieser Objekte werden in eine Umgebungskarte eingetragen.
4. Aus der Perspektive der Sensoren, welche zur Detektion der Umgebungsmerkmale dienen, werden die Einschränkungen der Sichtbereiche sowie deren prädizierte zeitliche Entwicklung aufgrund der Eigenbewegung des Fahrzeugs und der prädizierten Bewegungen der dynamischen Objekte in die Umgebungskarte eingetragen.
5. Es wird ermittelt, welche in die Umgebungskarte eingetragenen Umgebungsmerkmale in der nahen Zukunft im besten Fall sichtbar sein können.
6. Es wird eine obere Grenze für ein Gütemaß der Lokalisierung abgeschätzt.

In der Praxis wird ein Teil der in der Karte eingetragenen und nicht von der oben beschriebenen Verdeckungsprädiktion betroffenen Umgebungsmerkmalen dennoch nicht detektiert werden. Gründe können sein, dass einige Umgebungsmerkmale dennoch verdeckt sind, von den Sensoren aufgrund ungünstiger Verhältnisse nicht erkannt werden können (z. B. ungünstige Witterung) oder nicht mehr existieren. Somit kann in der Praxis die tatsächliche Lokalisierungsgüte geringer sein als die obere Grenze des Gütemaßes.

Für eine Vorrichtung zur Durchführung des Verfahrens entsprechend des Vorschlages ist es vorteilhaft, wenn die Vorrichtung mit wenigstens einer Prozessoreinrichtung ausgestattet ist, die dafür eingerichtet ist, die entsprechenden Verfahrensschritte durchzuführen.

Eine weitere Ausführungsform der Erfindung besteht in einem Fahrzeug, das eine entsprechende Vorrichtung zur Durchführung des Verfahrens aufweist.

Weiterhin kann der Vorschlag als Computerprogramm realisiert werden. Dieses Computerprogramm weist einen Programmcode auf, der zur Abarbeitung in einer Prozessoreinrichtung kommt und dabei die Verfahrensschritte des beanspruchten Verfahrens durchführt.

Mehrere Ausführungsbeispiele der Erfindung sind in den Zeichnungen dargestellt und werden nachfolgend anhand der Figuren näher erläutert.

Es zeigen:
- Fig. 1: eine Darstellung des Gesamtsystems mit einer Anzahl an Flotten-Fahrzeugen, die über Mobilfunk ans Internet angebunden sind und mit einem Backend-Server kommunizieren, der im Internet erreichbar ist;
- Fig. 2: das typische Cockpit eines Fahrzeuges;
- Fig. 3: ein Blockschaltbild der Kfz-Elektronik des Fahrzeuges;
- Fig. 4: den Ablauf des Verfahrens zur Bestimmung der Lokalisierungsgüte gemäß eines ersten Ausführungsbeispiels;
- Fig. 5: eine Illustration des ermittelten zukünftigen Sichtbereiches eines Sensors des Fahrzeuges, der benutzt wird, um abschätzen zu können, welche Landmarken zukünftig sichtbar sein werden;
- Fig. 6: eine Illustration von zwei Beispielen von sichtbaren Landmarken, einmal mit eingeschränkter Sicht zu den umgebenden Landmarken und zum anderen mit uneingeschränkter Sicht zu den umgebenden Landmarken; und
- Fig. 7: den Ablauf des Verfahrens zur Bestimmung der Lokalisierungsgüte gemäß eines zweiten Ausführungsbeispiels.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

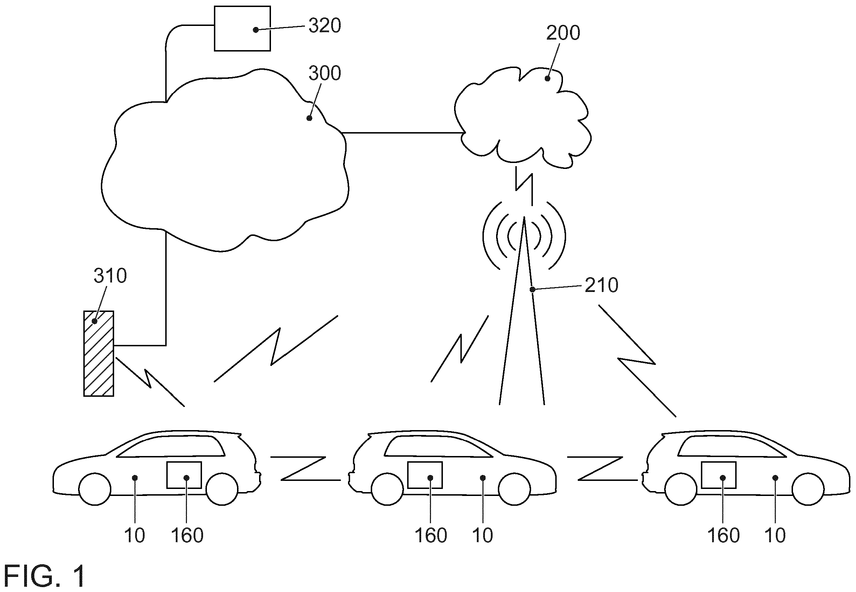

Fig. 1 zeigt die Anbindung von Fahrzeugen 10 über Mobilfunk an das Internet 300 und im Besonderen zu einer externen zentralen Recheneinheit 320, nachfolgend Backend-Server genannt, die im Internet 300 erreichbar ist.

Für die Bereiche kooperative Fahrmanöver oder autonomes Fahren ist eine Fahrzeugkommunikation, auch eine direkte Fahrzeug-zu-Fahrzeugkommunikation, und ggfs. auch noch eine Fahrzeug-zu-Infrastrukturkommunikation erforderlich. Alle drei verschiedenen Kommunikationsarten sind in Fig. 1 dargestellt. Die Anbindung an das Internet 300 geschieht über Mobilfunkkommunikation. Dabei kommuniziert ein im Fahrzeug 10 verbautes Kommunikationsmodul 160 mit einer Mobilfunk-Basisstation 210, in dessen Abdeckungsbereich das Fahrzeug 10 unterwegs ist. Die Basisstation 210 steht über ein EPC-Netzwerk 200 des Mobilfunkbetreibers, entsprechend Evolved Packet Core, mit dem Internet 300 in Verbindung. So kann das Fahrzeug 10 mit dem Backend-Server 320 kommunizieren, der im Internet 300 erreichbar ist.

Solche Mobilfunktechnologien sind standardisiert und es wird hier auf die entsprechenden Spezifikationen von Mobilfunkstandards verwiesen. Als modernes Beispiel für einen Mobilfunkstandard wird auf die 3GPP-Initiative und den LTE-Standard (Long Term Evolution) verwiesen. Viele der zugehörigen ETSI-Spezifikationen sind derzeit in der Version 14 verfügbar. Als Beispiel aus Version 13 wird folgendes genannt: ETSI TS 136 213 V13.0.0 (2016-05); es handelt sich um einen weiterentwickelten universellen terrestrischen Funkzugang (E-UTRA); Bitübertragungsschicht (3GPP TS 36.213 Version 13.0.0 Release 13).

LTE steht für hohe Übertragungsraten und kurze Antwortzeiten. Die Erhöhung der Übertragungsrate wird in LTE durch bessere Modulationsverfahren, flexiblere Frequenznutzung und größere Kanalbandbreiten erreicht. Gemäß der Spezifikation hat LTE derzeit eine Übertragungsrate von mehr als 300 MBit / s im Downlink und 75 MBit / s im Uplink pro 20 MHz-Band, mathematisch und weniger Overhead.

Wenn die Fahrzeuge untereinander Daten austauschen müssen, findet eine Fahrzeug-zu-Fahrzeug-Kommunikation statt. Dafür stehen verschiedene Kommunikationssysteme zur Verfügung. Beispiele sind die WLAN-basierte Fahrzeugdirektkommunikation entsprechend des Standards IEEE 802.11p und Fahrzeugdirektkommunikation im Bereich von Mobilfunknetzen. Bei dem Mobilfunk-Standard der vierten Generation, entsprechend Long Term Evolution LTE heißt diese Variante LTE-V, im Fall der 5G-lnitiative heißt diese Variante D2D, entsprechend Device to Device-Kommunikation. Daneben gibt es noch die sogenannte Fahrzeug-zu-Infrastruktur-Kommunikation. Dabei kommuniziert ein Fahrzeug mit den Infrastruktur-Komponenten, z.B. den sogenannte Road-Side Units RSU 310. Wenn diese Infrastruktur-Komponenten auch mit dem Backend-Server 320 in Verbindung stehen, kann die Kommunikation mit dem Backend-Server 320 auch über die Fahrzeug-zu-Infrastruktur-Kommunikation erfolgen.

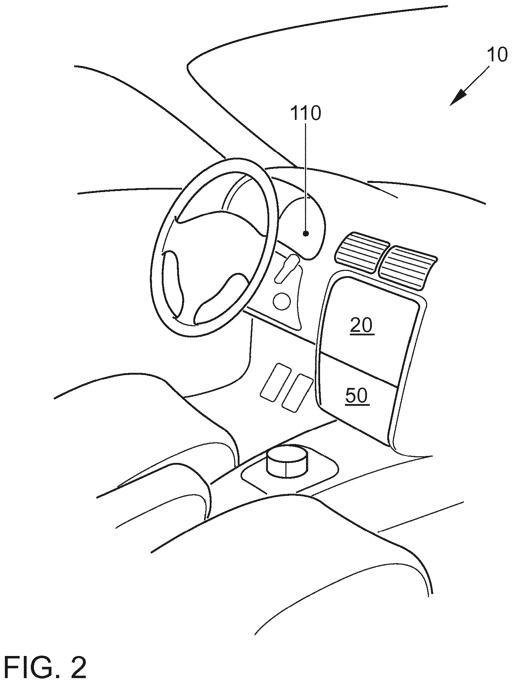

Fig. 2 zeigt das typische Cockpit eines Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Fahrräder, Motorräder, Busse, Nutzfahrzeuge, insbesondere Lastkraftwagen Lkw, Landmaschinen, Baumaschinen, Schienenfahrzeuge, usw. Der Einsatz der Erfindung wäre allgemein bei Landfahrzeugen, inklusive Robotern, Schienenfahrzeugen, Wasserfahrzeugen und Luftfahrzeugen inklusive Drohnen möglich.

In dem betrachteten Fall wird davon ausgegangen, dass das Fahrzeug 10 mit einem oder mehreren Fahrerassistenzsystemen ausgestattet ist und einen Automatisierungsgrad ab Stufe 3 nach Definition des VDA erfüllt. Eine wesentliche Komponente des Cockpits ist eine Anzeigeeinheit 20 eines Infotainment-Systems. Es handelt sich um einen berührungsempfindlichen Bildschirm 20, der in der Mittelkonsole angebracht ist. Der berührungsempfindliche Bildschirm 20 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 20 ("Touchscreen") benutzt, wobei dieser Bildschirm 20 insbesondere von einem Fahrer des Fahrzeugs 10, aber auch von einem Beifahrer des Fahrzeugs 10 gut eingesehen und bedient werden kann. Unterhalb des Bildschirms 20 können zudem mechanische Bedienelemente, beispielsweise Tasten, Drehregler oder Kombinationen hiervon, wie beispielsweise Drehdrückregler, in einer Eingabeeinheit 50 angeordnet sein. Typischerweise ist auch eine Lenkradbedienung von Teilen des Infotainment-Systems möglich. Dafür sind die Fahrzeuge 10 mit einer sogenannten Multifunktionslenkrad-Bedienung ausgestattet. Diese Einheit ist nicht separat dargestellt, sondern wird als Teil der Eingabeeinheit 50 betrachtet. Auch der große dargestellte Drehdrückregler im unteren Teil der Mittelkonsole wird als Teil der Eingabeeinheit betrachtet.

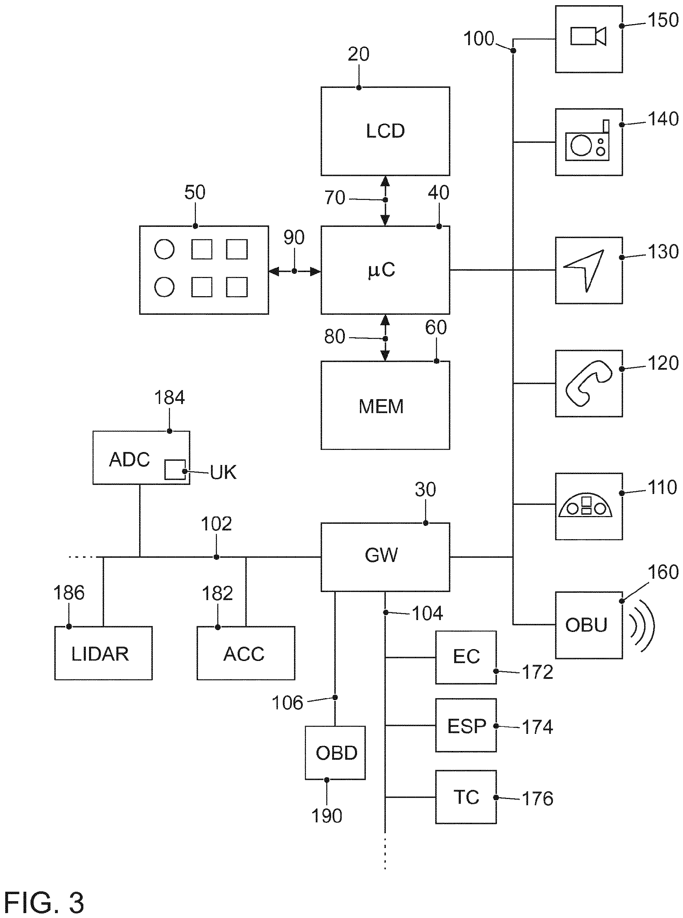

Fig. 3 zeigt schematisch ein Blockschaltbild der Kfz-Elektronik sowie beispielhaft einige Teilsysteme oder Applikationen des Infotainment-Systems. Das Infotainment-System umfasst neben weiteren Komponenten: die berührungsempfindliche Anzeigeeinheit 20, eine Recheneinrichtung 40, eine Eingabeeinheit 50 und einen Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für mögliche Einblendungen von Zusatzinformationen.

Die weiteren Komponenten des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Für die drahtlose Kommunikation nach innen und außen ist das Fahrzeug 10 mit dem Kommunikationsmodul 160 ausgestattet. Dieses Modul wird oft auch als On-Board Unit oder auch als On-Board Connectivity Unit bezeichnet. Es kann für die MobilfuncKommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Der Kommunikationsbus 100 des Infotainment-Systems ist mit einem Gateway 30 verbunden. Daran angeschlossen sind auch die anderen Teile der Kfz-Elektronik. Zum Einen der Kommunikationsbus 104 des Antriebstrangs, der typischerweise in Form des CAN-Bus realisiert wird. Als Beispiele sind die Steuergeräte des Antriebstrangs Motorsteuergerät 172, ESP-Steuergerät 174 und Getriebesteuergerät 176 genannt und gezeigt. Weiter der Kommunikationsbus 102 für Fahrerassistenzsysteme, der in Form des FlexRay-Busses ausgebildet sein kann. Dabei sind zwei Fahrerassistenzsysteme dargestellt: ein Fahrerassistenzsystem 182 zur automatischen Abstandsregelung ACC entsprechend Adaptive Cruise Control, ein Fahrautomaten-Steuergerät 184 das eine automatische Fahrfunktion mit automatischer Lenkung durchführt 184, und ein LIDAR-Sensor 186, entsprechend Light Detection and Ranging. Weiterhin ist noch ein Kommunikationsbus 106 an das Gateway 30 angeschlossen. Dieser verbindet das Gateway 30 mit einer On-Board Diagnoseschnittstelle 190. Die Aufgabe des Gateway 30 besteht darin, die Formatumwandlungen für die verschiedenen Kommunikationssysteme 100, 102, 104, 106 zu machen, sodass untereinander Daten ausgetaucht werden können. Im gezeigten Ausführungsbeispiel macht das Fahrerassistenzsystem 184 für die Fahraufgabe von einer hochgenauen Umgebungskarte Gebrauch. Die Umgebungskarte UK kann in einer ersten Ausführungsform vorab in einem Speicher des Fahrautomaten-Steuergerät 184 abgespeichert werden. Dazu wird sie üblicherweise über das Kommunikationsmodul 160 geladen, von dem Gateway 30 weitergeleitet und in den Speicher des Fahrautomaten-Steuergerät 184 geschrieben. In einer anderen Variante wird nur ein Ausschnitt einer Umgebungskarte UK geladen und in den Speicher des Fahrerassistenzsystems geschrieben. Dies ermöglicht es, dass ein kleinerer Speicher in dem Fahrautomaten-Steuergerät 184 vorgesehen werden kann und verringert die Kosten. Die hochgenaue Umgebungskarte UK kann für ein Land wie Deutschland schon einige Gigabyte an Daten bedeuten.

Das Fahrzeug 10 ist mit den beiden Umgebungssensoren Videokamera 150 und LIDAR-Sensor 186 ausgestattet. Typischerweise sind sogar mehrere Videokameras 150 (FrontKamera, Heck-Kamera, Seitenkamera links, Seitenkamera rechts) in dem Fahrzeug 10 verbaut. So ist es möglich durch Bildverarbeitung eine Rundumsicht für das Fahrzeug 10 zu erzeugen. Der LIDAR-Sensor 186 wird typischerweise im Frontbereich des Fahrzeuges 10 verbaut und erfasst die Umgebung in Fahrtrichtung des Fahrzeuges 10. Daneben könnten auch noch Ultraschallsensoren und RADAR-Sensoren eingesetzt werden.

Die genannten Umgebungssensoren, die in der Lage sind, das Umfeld des Fahrzeuges zu erfassen, sind für unterschiedliche Entfernungen und unterschiedliche Einsatzzwecke einzusetzen. Es gelten in etwa die folgenden Reichweiten- und Zweckangaben:
- Eine Stereo-Kamera, Reichweite 500m, dient zur Erfassung einer 3D-Karte, benutzt für einen automatischen Notbremsassistenten, Spurwechselassistenten, zur Verkehrsschilderkennung und einen Abstandsregeltempomaten.
- Kamera, Reichweite 100 m, dient zur Erfassung einer 3D-Karte, benutzt für einen automatischen Notbremsassistenten, Spurwechselassistenten, zur Verkehrsschilderkennung, einen Abstandsregeltempomaten, zur Frontaufprallwarnung, automatischer Lichtsteuerung und einen Parkassistenten.
- Ultraschallsensor, Reichweite <10m, Parkassistent.
- Radar-Sensor, Reichweite 20 cm bis 100 m, benutzt für einen automatischen Notbremsassistenten, zur automatischen Geschwindigkeitsregelung, einen Abstandsregeltempomaten, einen Totwinkelassistenten, einen Querverkehralarmgeber
- LIDAR-Sensor, Reichweite 100 m, dient zur Erfassung einer 3D-Karte, benutzt für einen automatischen Notbremsassistenten.

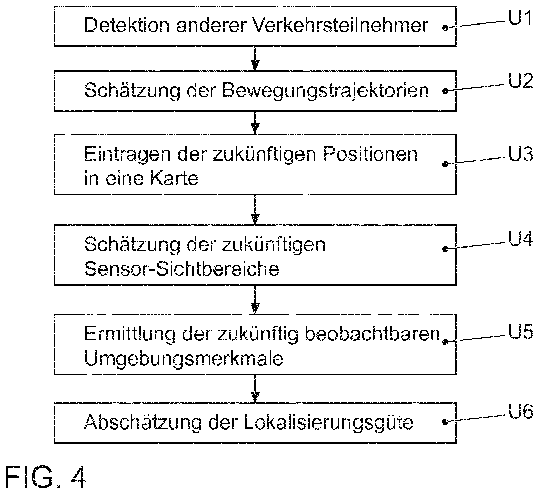

Zur Beurteilung der Lokalisierungsgüte werden folgende Verfahrensschritte durchgeführt, die anhand des in der Fig. 4 dargestellten Ablaufplanes erläutert werden.

Das Ablaufdiagramm für diese Schritte kann wie ein Flussdiagramm für ein Computerprogramm angesehen werden, das in einer Recheneinheit des Fahrzeuges 10 zur Abarbeitung kommt. In einer Ausführungsform ist die Recheneinheit Teil des Fahrerassistenzsystems 184. In einer anderen Variante wird das Programm von der Recheneinheit 40 des Infotainmentsystems abgearbeitet. Die Position des Fahrzeuges 10 ist zumindest über das GNSS-System grob bekannt. Als Umgebungsmerkmal kommt z.B. eine Landmarke in Betracht. Unter einer Landmarke wird hier ein deutlich sichtbares Umgebungsmerkmal verstanden. Es kann sich um ein in der Natur vorkommendes meist weithin sichtbares topographisches Objekt, wie einen Baum, Felsen, Berggipfel und dergleichen, handeln. Andere Beispiele von Landmarken betreffen Bauwerke wie Kirchen, Türme, Windräder, Burgen. Aber auch am Straßenrand aufgestellte Landmarken, wie Ampeln, Straßenschilder, Verkehrsschilder, Straßenlaternen, Brücken, Entfernungsmarken, Häuserkanten, werden als Beispiel erwähnt. Die Aufzählung ist nicht abschließend.

Fig. 4 zeigt die einzelnen Verfahrensschritte, die im Fahrzeug 10 durchgeführt werden, um die Lokalisierungsgüte abzuschätzen. Im Schritt U1 werden die anderen Verkehrsteilnehmer erfasst. Dazu wird die im Fahrzeug eingebaute Umgebungssensorik eingesetzt. In dem in Fig. 3 gezeigten Beispiel wird die Videokamera 150 und der LIDAR-Sensor 186 eingesetzt. Zur Erfassung zählt auch die Bildauswertung. Dabei erfolgt die Bildauswertung in einer separaten Prozessoreinheit. Im betrachteten Fall würde die Bildauswertung in einer Prozessoreinheit des Fahrautomaten-Steuergerätes 184 erfolgen. Dafür ist es notwendig, die Sensordaten zu dem Fahrautomaten-Steuergerät 184 zu übertragen. Dafür werden die verschiedenen Bussysteme und das Gateway 30 eingesetzt. Das Fahrautomaten-Steuergerät 184 ist mit einem entsprechend großen Speicher ausgestattet, in dem die Sensordaten zwischengespeichert werden.

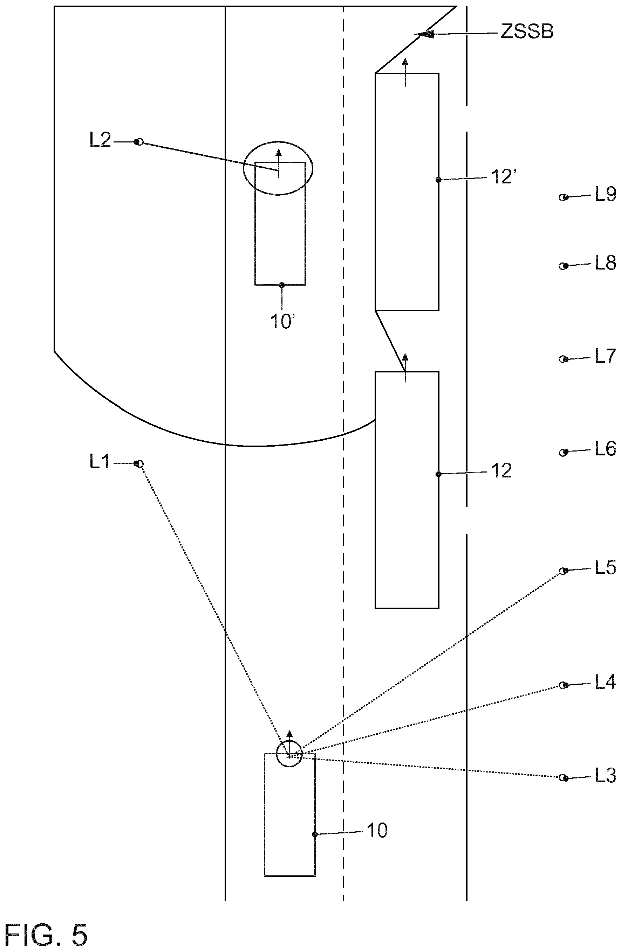

Als illustrierendes Beispiel soll hier die Fahrt auf einer Fahrbahn mit zwei oder mehr Fahrstreifen und hohem Lkw-Aufkommen dienen. Dieses Szenario ist in der Fig. 5 gezeigt. Die Lkw 12 werden typischerweise den rechten Fahrstreifen benutzen und auf dem linken Fahrstreifen von den leichteren Fahrzeugen 10 überholt werden. Die Umgebungssensoren des automatischen Fahrzeugs 10 werden bei dem Überholvorgang die vorausfahrenden Lkw 12 auf dem rechten Fahrstreifen erkennen. Es erfolgt eine mehrfache Erfassung zeitlich nacheinander. In einer erweiterten Ausführungsform könnten noch weitere Verkehrsteilnehmer erfasst werden. Als erstes werden die auf der Fahrbahn in entgegenkommender Fahrtrichtung fahrenden Fahrzeuge genannt, durch die ebenfalls eine Verdeckung von Landmarken erfolgen kann. Als weiteres Beispiel werden Verkehrsteilnehmer genannt, die auf einer parallel verlaufenden Straße unterwegs sind.

Damit kann dann auch die Bewegung der vorausfahrenden Lkw 12 abgeschätzt werden. Dies erfolgt im Verfahrensschritt U2. Dort werden die Bewegungstrajektorien der erfassten vorausfahrenden Lkw 12 bestimmt. Die Rechenalgorithmen, die dafür einsetzbar sind, werden als bekannt vorausgesetzt.

Im Schritt U3 erfolgt dann das Eintragen der zukünftigen Positionen der erfassten vorausfahrenden Fahrzeuge in die Umgebungskarte UK mit Angabe des Zeitpunktes, der für den Eintrag gültig ist. Hier wird auch die Ausdehnung des vorausfahrenden Fahrzeuges 12 in die Karte eingetragen. Hierzu können umhüllende Quader mit Längen-, Breiten- und Höhenangabe definiert werden. Ziel ist es ja, dass das automatische Fahrzeug 10 abschätzen soll, wann es keine Landmarken mehr auf der rechten Seite detektieren können wird, s. Fig. 5.

Um diese Aufgabe mit guter Genauigkeit durchführen zu können, wird im Schritt U4 noch der zukünftige Sensorsichtbereich abgeschätzt. Dabei wird für den zukünftigen Zeitpunkt die Position des Sensors abgeschätzt. Diese ergibt sich ja aus der Bewegungstrajektorie des Fahrzeuges 10. Dem Fahrzeug ist durch Vorkonfiguration bekannt, wo die eigentliche Sensorposition im Fahrzeug 10 ist. Der zukünftige Sensor-Sichtbereich ist in der Fig. 5 dargestellt und mit Bezugszeichen ZSSB markiert. Dort ist auch erkennbar, dass zum dargestellten Zeitpunkt keine der auf der rechten Seite eingezeichneten Landmarken L3 - L9 im Sensorsichtbereich ZSSB liegen. Der Sensorsichtbereich ZSSB hat eine gewisse Erstreckung in die jeweilige Richtung. In dem Fahrautomaten-Steuergerät 184 kann der Sensorsichtbereich ZSSB winkelabhängig quantitativ angegeben werden, indem für verschiedene Kreissegmente eine Entfernungsangabe abgespeichert wird, die angibt, bis zu welcher Entfernung zum Sensor die Sicht frei ist.

Nach oben und nach links ist der Sensorsichtbereich ZSSB nicht vollständig dargestellt. Nach rechts ist die Sicht durch den daneben befindlichen Lkw 12' weitgehend blockiert. Die Bezugszahl 12' bezeichnet die vorausberechnete, zukünftige Position des Lkw 12. Nach unten ist die Erstreckung des Sensorsichtbereiches ZSSB nicht allzu weit. Handelt es sich bei dem Sensor um die Videokamera 150, die als Frontkamera installiert ist, so wird sie nach hinten üblicherweise gar keine Sicht haben. Wie oben bereits erwähnt, ist die Erfassung von Objekten typischerweise bis zu einer Entfernung von 100 m möglich.

Nachdem der Sensorsichtbereich ZSSB bestimmt wurde, erfolgt im Schritt U5 die Ermittlung der zukünftig beobachtbaren Landmarken. Wiederum in Fig. 5 ist dargestellt, dass in dem zukünftigen Sichtbereich ZSSB nur eine Landmarke L2 auf der linken Seite liegt.

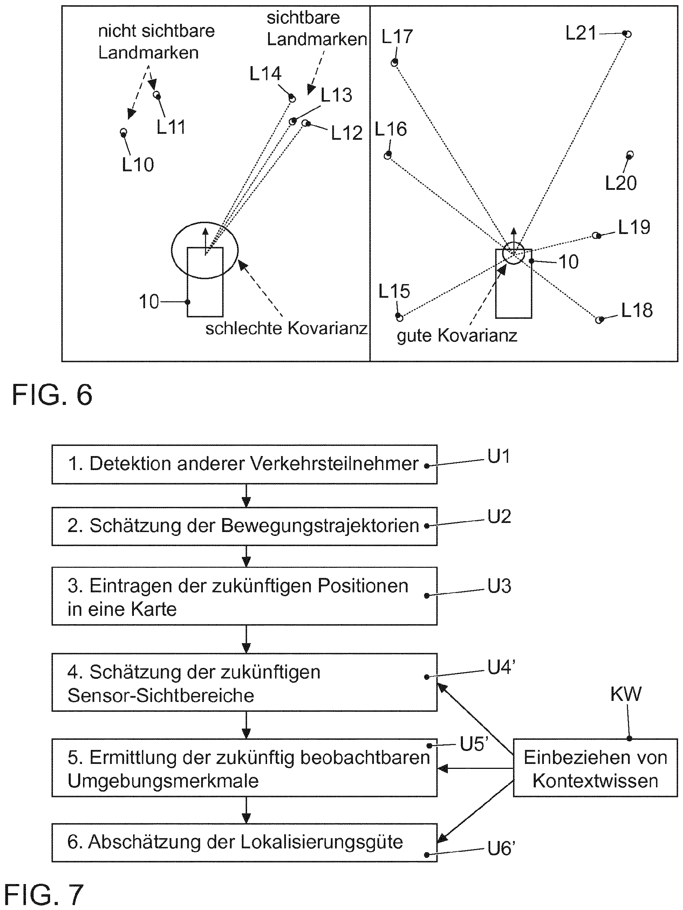

Schließlich erfolgt im Schritt U6 noch die Abschätzung der Lokalisierungsgüte. Diese Abschätzung beruht in dem gezeigten Ausführungsbeispiel auf der Berechnung der Kovarianz der Positionen der noch zu beobachtenden Landmarken, wobei von der zukünftigen Position des Sensors 150 als Koordinatenursprung ausgegangen wird. Die Kovarianz gehört zu den statistischen Größen und ihre Berechnung wird als bekannt vorausgesetzt. Zwei Beispiele von möglichen Verteilungen der beobachtbaren Landmarken sind in der Fig. 6 dargestellt. Im linken Teil der Fig. 6 sind die zukünftig sichtbaren Landmarken mit Bezugszeichen L12 - L14 bezeichnet. Die nicht sichtbaren Landmarken sind mit Bezugszeichen L10, L11 bezeichnet. Zu sehen ist eine starke Konzentration der sichtbaren Landmarken in diesem Teil der Fig. 6. Die Berechnung der Kovarianz liefert einen großen Wert. Der Wert würde voraussichtlich größer als 1 sein und drückt damit aus, dass die Stichproben eng beieinander liegen. Damit lässt sich aber die Position des Fahrzeuges 10 nur relativ ungenau bestimmen. Im rechten Teil der Fig. 6 ist dargestellt, dass mehr räumlich getrennte Landmarken L15 - L19, L21 im Sichtbereich liegen. Wird hierzu die Kovarianz berechnet, so ergibt sich ein niedriger Wert, der voraussichtlich kleiner als 1 ist. Damit lässt sich die Position des Fahrzeuges 10 sehr genau bestimmen und die Lokalisierungsgüte ist hoch. Bei diesem Ausführungsbeispiel wird die Lokalisierungsgüte direkt durch den Kovarianzwert repräsentiert. In einem anderen Ausführungsbeispiel wird die Lokalisierungsgüte einer Tabelle entnommen, in der für verschiedene Bereiche von Kovarianzwerten die Lokalisierungsgüte verzeichnet ist.

In der Fig. 7 ist noch ein zweites Ausführungsbeispiel für den Ablauf des Verfahrens für die Abschätzung der Lokalisierungsgüte gezeigt. Die verschiedenen Schritte U1 bis U6 tauchen ebenfalls auf und brauchen deshalb nicht nochmal erläutert zu werden.

Bei diesem Ausführungsbeispiel werden allerdings auch andere Umgebungsmerkmale für die Lokalisierung verwendet. Zu solchen Umgebungsmerkmalen gehören beispielsweise auch Straßenmarkierungen. Deren Verdeckung durch Objekte ist im oben beschriebenen Verfahren berücksichtigt. Hier tritt noch das zusätzliche Problem der Verdeckung durch Verschmutzung, Schnee, Laub etc. auf. Auch hierzu kann bei dieser Variante eine Prädiktion erfolgen. Diese basiert auf Kontextwissen und den Beobachtungen der jüngsten Vergangenheit. Ausgangspunkt ist eine Umgebungskarte UK mit eingetragenen Straßenmarkierungen.

Das Kontextwissen ermöglicht:
- Eine Beurteilung, ob mit einer globalen Erkennungsbeeinträchtigung zu rechnen ist, z. B. aufgrund von Schnee.
- Eine Beurteilung, ob mit einer lokalen Erkennungsbeeinträchtigung zu rechnen ist, z. B. aufgrund von Verunreinigungen auf der Straße aufgrund von Baustellenverkehr.

Das Einbeziehen des Kontextwissen ist in Fig. 7 mit der Bezugszahl KW bezeichnet. Abhängig von diesen Informationen werden sowohl die zu erwartenden Sichtbereiche ZSSB, die zukünftig beobachtbaren Umgebungsmerkmale und somit die Lokalisierungsgüte beeinflusst. Das entspricht in Fig. 7 den Schritten U4', U5' und U6'.

Die beiden Varianten für den Ablauf des Verfahrens unterscheiden sich durch den Typ der verwendeten Umgebungsmerkmale. Abhängig vom Typ kann zusätzliches Vorwissen berücksichtigt werden. Das Prinzip der zu erwartenden Sichtbereiche und die daraus folgende Schätzung der Lokalisierungsgüte bleibt jedoch gleich. Welche Alternative bevorzugt wird, hängt von der zur Verfügung stehenden Sensorik des Fahrzeugs 10 ab.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste

- 10: Fahrzeug
- 12: Lkw (bewegliches Hindernis)
- 20: berührungsempfindliche Anzeigeeinheit
- 30: Gateway
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: 1. Datenbus
- 102: 2. Datenbus
- 104: 3. Datenbus
- 106: 4. Datenbus
- 110: Kombiinstrument
- 120: Telefon
- 130: Navigationsgerät
- 140: Radio
- 150: Kamera
- 160: Kommunikationsmodul
- 172: Motorsteuergerät
- 174: ESP-Steuergerät
- 176: Getriebe-Steuergerät
- 182: Abstandsregelungs-Steuergerät
- 184: Fahrautomaten-Steuergerät
- 186: Lidar-Sensor
- 190: On-Board Diagnosestecker
- 200: Evolved Packet Core
- 210: Mobilfunk-Basisstation
- 300: Internet
- 310: Funkbake
- 320: Backend-Zentralrechner
- U1 - U6': verschiedene Schritte die im Fahrzeug abgearbeitet werden
- L1 - L21: Landmarken
- ZSSB: zukünftiger Sichtbereich

## Patentansprüche

1. Verfahren zur Schätzung der Lokalisierungsgüte bei der Eigenlokalisierung eines Fahrzeuges (10), bei dem zur Eigenlokalisierung eine Umgebungskarte (UK) eingesetzt wird, die bei der Steuerung eines Fahrzeuges (10) zum Einsatz kommt, wobei ein Fahrzeug (10) bei Befahren einer Fahrbahn versucht, eine Anzahl von in der Umgebungskarte (UK) verzeichneten Landmarken (L1 - L21) sensorisch zu erfassen, und aus der Lage der Anzahl von Landmarken (L1 - L21) die Eigenposition des Fahrzeuges (10) bestimmt, wobei im Fahrzeug (10) die zukünftige Sichtbarkeit von Landmarken (L1 - L21) bestimmt wird und in Abhängigkeit von der Sichtbarkeit der Landmarken (L1 - L21) die Lokalisierungsgüte bei der Eigenlokalisierung des Fahrzeuges (10) geschätzt wird, wobei zur Bestimmung der zukünftigen Sichtbarkeit von Landmarken (L1 - L21) ein Schritt des Detektierens von Hindernissen erfolgt, die die Sichtbarkeit von Landmarken (L3 - L7) einschränken, der die sensorische Erfassung von beweglichen Hindernissen (12) auf der Fahrbahn und optional in der Umgebung der Fahrbahn umfasst, **dadurch gekennzeichnet, dass** der Schritt zur Bestimmung der zukünftigen Sichtbarkeit von Landmarken (L1 - L21) weiterhin einen Schritt der Schätzung von Bewegungstrajektorien der beweglichen Hindernisse (12) und einen Schritt des Eintragens von vorausberechneten Positionen der beweglichen Hindernisse (12) in die Umgebungskarte (UK) umfasst.

2. Verfahren nach Anspruch 1, wobei der Schritt des Eintragens der vorausberechneten Positionen der beweglichen Hindernisse (12) in die Umgebungskarte (UK) einen Schritt des Eintragens der räumlichen Ausdehnung des beweglichen Hindernisses (12) umfasst.

3. Verfahren nach Anspruch 1 oder 2, wobei der Schritt zur Bestimmung der zukünftigen Sichtbarkeit von Landmarken (L1 - L21) weiterhin einen Schritt der Schätzung des zukünftigen Sichtbereiches (ZSSB) eines Sensors (150, 186) des Fahrzeuges (10) umfasst.

4. Verfahren nach Anspruch 3, wobei das Verfahren weiterhin einen Schritt der Ermittlung der aufgrund des ermittelten zukünftigen Sichtbereiches (ZSSB) zukünftig zu beobachtenden Landmarken (L1 - L21) umfasst.

5. Verfahren nach Anspruch 4, wobei die Lokalisierungsgüte bei der Eigenlokalisierung des Fahrzeuges (10) in Abhängigkeit von der Anzahl der zukünftig zu beobachtenden Landmarken (L1 - L21) bestimmt wird.

6. Verfahren nach Anspruch 4, wobei die Lokalisierungsgüte durch statistische Auswertung der zukünftig zu beobachtenden Landmarken (L1 - L21) unter Berücksichtigung der relativen Lage der Landmarken (L1 - L21) zueinander bestimmt wird.

7. Verfahren nach Anspruch 6, wobei zur statistischen Auswertung der zukünftig zu beobachtenden Landmarken (L1 - L21) eine Berechnung der Kovarianz der relativen Lagen der zu beobachtenden Landmarken (L1 - L21) zueinander erfolgt.

8. Vorrichtung zur Durchführung des Verfahrens nach einem der vorhergehenden Ansprüche, wobei die Vorrichtung mit wenigstens einer Prozessoreinrichtung (184, 40) ausgestattet ist, die dafür eingerichtet ist, die Verfahrensschritte bei dem Verfahren nach einem der vorhergehenden Ansprüche durchzuführen.

9. Fahrzeug, **dadurch gekennzeichnet, dass** das Fahrzeug (10) eine Vorrichtung nach Anspruch 8 aufweist.

10. Computerprogram aufweisend einen Programmcode, der bei Abarbeitung in einer Prozessoreinrichtung die Verfahrensschritte nach einem der Ansprüche 1 bis 7 durchführt.

## Claims

1. A method for estimating the quality of localization in the self-localization of a vehicle (10), in which a map of the surrounding area (UK) is used for the self-localization, the map being used in controlling the vehicle (10), wherein a vehicle (10), when driving on a road, attempts to detect a number of landmarks (L1 - L21) recorded in the map of the surrounding area (UK) using sensors, and determines the position of the vehicle (10) itself from the position of the number of landmarks (L1 - L21), wherein the future visibility of landmarks (L1 - L21) is determined in the vehicle (10) and the quality of localization in the self-localization of the vehicle (10) is estimated depending on the visibility of the landmarks (L1 - L21), wherein a step of detecting obstacles that restrict the visibility of landmarks (L3 - L7) is carried out for determining the future visibility of the landmarks (L1 - L21), which comprises the detection of moving obstacles (12) on the roadway and optionally in the surrounding area of the roadway using sensors, **characterized in that** the step of determining the future visibility of landmarks (L1 - L21) further comprises a step of estimating movement trajectories of the moving obstacles (12) and a step of recording the projected positions of the moving obstacles (12) in the map of the surrounding area (UK).

2. The method of claim 1, wherein the step of recording the projected positions of the moving obstacles (12) in the map of the surrounding area (UK) comprises a step of recording the spatial extent of the moving obstacles (12).

3. The method of claim 1 or 2, wherein the step of determining the future visibility of landmarks (L1 - L21) further comprises a step of estimating the future visibility range (ZSSB) of a sensor (150, 186) of the vehicle (10).

4. The method of claim 3, wherein the method further comprises a step of determining the landmarks (L1 - L21) to be observed in future on the basis of the determined future visibility ranges (ZSSB).

5. The method of claim 4, wherein the quality of localization in the self-localization of the vehicle (10) is determined depending on the number of landmarks (L1 - L21) to be observed in future.

6. The method of claim 4, wherein the quality of localization is determined through statistical evaluation of the landmarks (L1 - L21) to be observed in future, taking account of the position of the landmarks (L1 - L21) in relation to one another.

7. The method of claim 6, wherein the covariance of the positions of the landmarks (L1 - L21) which are to be observed in relation to one another is calculated for the statistical evaluation of the landmarks (L1 - L21) to be observed in future.

8. A device for carrying out the method as claimed in one of the preceding claims, wherein the device is equipped with at least one processor device (184, 40) which is configured to carry out the method steps in the method as claimed in one of the preceding claims.

9. A vehicle, **characterized in that** the vehicle (10) has a device as claimed in claim 8.

10. A computer program having a program code which, when executed in a processor device, carries out the method steps as claimed in one of claims 1 to 7.

## Revendications

1. Procédé d'estimation de la qualité de localisation lors de la localisation propre d'un véhicule (10), lors duquel une carte des environs (UK) est utilisée pour la localisation propre, laquelle s'emploie lors de la commande d'un véhicule (10), dans lequel un véhicule (10) essaie lors du parcours d'une voie de détecter sensoriellement un certain nombre de points de repère (L1 à L21) recensés dans la carte des environs (UK), et détermine à partir de la position du certain nombre de points de repère (L1 à L21) la position propre du véhicule (10), dans lequel la visibilité future de points de repère (L1 à L21) est déterminée dans le véhicule (10) et la qualité de localisation lors de la localisation propre du véhicule (10) est estimée en fonction de la visibilité des points de repère (L1 à L21), dans lequel une étape de détection d'obstacles, qui limitent la visibilité de points de repère (L3 à L7), s'effectue lors de la détermination de la visibilité future de points de repère (L1 à L21), laquelle comprend la détection sensorielle d'obstacles mobiles (12) sur la voie et en option dans les environs de la voie, **caractérisé en ce que** l'étape de détermination de la visibilité future de points de repère (L1 à L21) comprend en outre une étape d'estimation de trajectoires de mouvement des obstacles mobiles (12) et une étape d'enregistrement de positions calculées au préalable des obstacles mobiles (12) dans la carte des environs (UK).

2. Procédé selon la revendication 1, dans lequel l'étape d'enregistrement des positions calculées au préalable des obstacles mobiles (12) dans la carte des environs (UK) comprend une étape d'enregistrement de l'étendue spatiale de l'obstacle mobile (12).

3. Procédé selon la revendication 1 ou 2, dans lequel l'étape de détermination de la visibilité future de points de repère (L1 à L21) comprend en outre une étape d'estimation de la zone de visibilité future (ZSSB) d'un capteur (150, 186) du véhicule (10).

4. Procédé selon la revendication 3, dans lequel le procédé comprend en outre une étape de détermination des points de repère (L1 à L21) à observer à l'avenir en raison de la zone de visibilité future déterminée (ZSSB).

5. Procédé selon la revendication 4, dans lequel la qualité de localisation lors de la localisation propre du véhicule (10) est déterminée en fonction du nombre des points de repère (L1 à L21) à observer à l'avenir.

6. Procédé selon la revendication 4, dans lequel la qualité de localisation est déterminée par évaluation statistique des points de repère (L1 à L21) à observer à l'avenir en tenant compte de la position relative des points de repère (L1 à L21) l'un par rapport à l'autre.

7. Procédé selon la revendication 6, dans lequel un calcul de la covariance des positions relatives des points de repère à observer (L1 à L21) l'un par rapport à l'autre s'effectue pour l'évaluation statistique des points de repère (L1 à L21) à observer à l'avenir.

8. Dispositif pour la réalisation du procédé selon une des revendications précédentes, dans lequel le dispositif est équipé d'au moins une installation de processeur (184, 40) qui est configurée pour réaliser les étapes de procédé lors du procédé selon une des revendications précédentes.

9. Véhicule, **caractérisé en ce que** le véhicule (10) présente un dispositif selon la revendication 8.

10. Programme informatique présentant un code de programme, qui réalise lors du traitement dans une installation de processeur les étapes de procédé selon une des revendications 1 à 7.
